# EUROPEAN PATENT APPLICATION

(11) **EP 4 682 086 A1**
(43) Date of publication of application: **21.01.2026**
(21) Application number: 24866578.8
(22) Date of filing: 18.12.2024
(51) Int. Cl.: B65G 1/04, B65G 1/137, B65G 1/08

(54) **PICKUP MECHANISM AND PICKING SYSTEM**

(30) Priority: 31.05.2024 CN 202410703275
(71) Applicant: Beijing Jingdong Qianshi Technology Co., Ltd., Beijing 100176 (CN)
(72) Inventor: LIANG, Zhe, Beijing 100176 (CN); WANG, Guopeng, Beijing 100176 (CN); ZHU, Sen, Beijing 100176 (CN); SHANG, Chunpeng, Beijing 100176 (CN); ZHANG, Guoliang, Beijing 100176 (CN)
(74) Representative: Page White Farrer
(86) International application number: PCT/CN2024/140379
(87) International publication number: WO 2025/246301

(57) **Abstract**

The present application discloses a pickup mechanism and a pickup system. The pickup mechanism comprises a lifting frame, an article picker and a sorting assembly. The article picker is movably connected to the lifting frame through a movement assembly. The sorting assembly is connected to the lifting frame, and includes a plurality of sorting hoppers. The article picker is configured to pick up articles located on a shelf and convey the articles to any one of the plurality of sorting hoppers.

## Description

### CROSS-REFERENCE TO RELATED APPLICATIONS

The present application claims priority to China Patent Application No. 202410703275.5 filed on May 31, 2024, the title of which is "PICKUP MECHANISM AND PICKUP SYSTEM", and which is incorporated by reference herein in its entirety.

### TECHNICAL FIELD

The present application relates to the field of warehousing logistics technology, in particular to a pickup mechanism and a pickup system comprising the pickup mechanism.

### BACKGROUND

With the rapid development of warehousing logistics technology, in order to improve the storage and transport efficiency of materials, more and more devices are used to store or transport materials. However, the picking efficiency of the pickup mechanism in the related art needs to be further improved.

### SUMMARY

According to a first aspect, the embodiments of the present application provide a pickup mechanism including a lifting frame, an article picker and a sorting assembly; the article picker is movably connected to the lifting frame through a movement assembly; the sorting assembly is connected to the lifting frame and includes a plurality of sorting hoppers; wherein the article picker is configured to pick up articles on a shelf and convey the articles to any one of the plurality of sorting hoppers.

According to a second aspect, the embodiments of the present application provide a pickup system including the above-described pickup mechanism.

### BRIEF DESCRIPTION OF THE DRAWINGS

Fig. 1 is a three-dimensional schematic diagram from one perspective of a pickup system according to an embodiment of the present application.
Fig. 2 is a three-dimensional schematic diagram from another perspective of the pickup system according to the embodiment of the present application from another perspective.
Fig. 3 is a three-dimensional schematic diagram of a pickup mechanism according to the embodiment of the present application.
Fig. 4 is a three-dimensional schematic diagram of a sorting assembly according to the embodiment of the present application.
Fig. 5 is a schematic view showing that a trigger of the sorting assembly is located between an abutment member and a pressing member of a workstation.
Fig. 6 is a three-dimensional schematic diagram of a workstation according to the embodiment of the present application.
Fig. 7 is a three-dimensional schematic diagram of a cache component according to the embodiment of the present application.
Fig. 8 is a three-dimensional schematic diagram of a cache hopper according to the embodiment of the present application.
Fig. 9 is a three-dimensional schematic diagram of a confluence hopper according to the embodiment of the present application.
Fig. 10 is a three-dimensional schematic diagram showing a article picker applied to a shelf according to the embodiment of the present application.
Fig. 11 is a three-dimensional schematic diagram of the article picker according to the embodiment of the present application.
Fig. 12 is a partial schematic view of a pickup assembly according to the embodiment of the present application.
Fig. 13 is a partial schematic view of a pickup assembly according to the embodiment of the present application from another perspective.
Fig. 14 is a three-dimensional schematic diagram of a guide member according to the embodiment of the present application.
Fig. 15 is a three-dimensional schematic diagram in which the guide member in Fig. 13 is omitted.
Fig. 16 shows that the pickup assembly and a locator correspond to two channel assemblies located on different layers respectively.

### DETAILED DESCRIPTION

The exemplary embodiments will now be described more comprehensively with reference to the accompanying drawings. However, the exemplary embodiments may be implemented in multiple forms and should not be construed as limited to the embodiments set forth here. Rather, these embodiments are provided so that the present application will be thorough and complete, and will comprehensively convey the concepts of the exemplary embodiments to those skilled in the art. The same reference numerals in the accompanying drawings indicate the same or similar structures, and thus their detailed descriptions will be omitted.

It can be understood that, the terms "including" and "having" as well as any variations thereof in the embodiments of the present application are intended to cover non-exclusive inclusion. For example, a process, method, system, product or device that contains a series of steps or units is not limited to the steps or units as listed, but alternatively further includes steps or units that are not listed, or alternatively further includes other steps or components inherent to these processes, methods, products or devices.

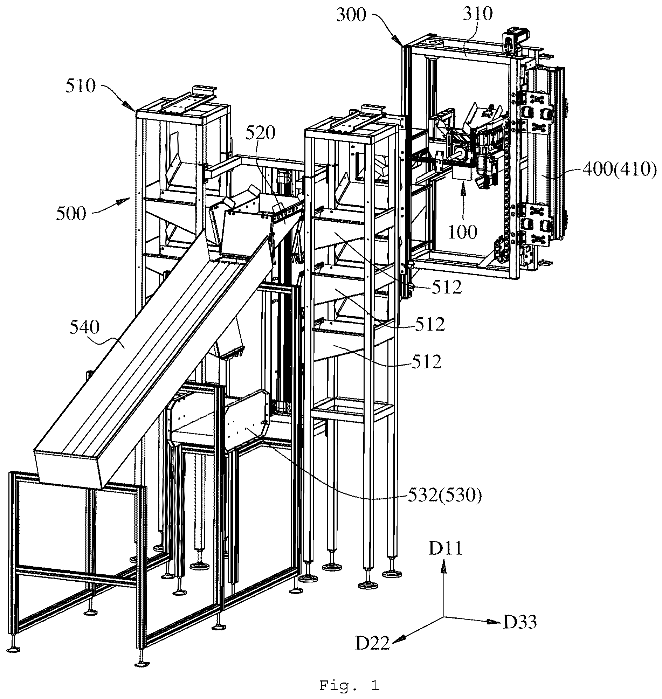

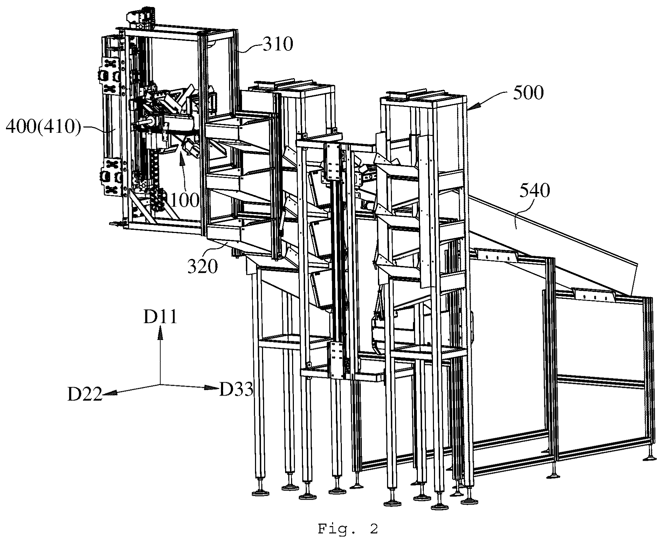

As shown in Figs. 1 and 2, the pickup system according to the embodiments of the present application includes a pickup mechanism 300, a traveling mechanism 400 and a workstation 500. The pickup mechanism 300 is liftably connected to the traveling mechanism 400 along a first direction D11. Wherein, in the embodiment of the present application, the first direction D11 is a vertical direction. The workstation 500 is arranged on the ground and configured to pack the sorted articles. The traveling mechanism 400 is movably arranged on the ground, and moves between a position close to the workstation 500 and a position away from the workstation 500 along a third direction D33.

When picking up articles, the traveling mechanism 400 drives the pickup mechanism 300 to move to the vicinity of the shelf along the third direction D33, and the pickup mechanism 300 rises and falls along the first direction D11 to ensure that the pickup mechanism 300 is aligned with the articles to be picked up. After the pickup mechanism 300 picks up the articles from the shelf and places them in the pickup mechanism 300, the traveling mechanism 400 drives the pickup mechanism 300 to move to the vicinity of the workstation 500 again, so that the pickup mechanism 300 conveys the articles to the workstation 500.

The traveling mechanism 400 includes an upright 410. It is to be noted that, in order to simplify the views, Figs. 1 and 2 only show part of the uprights 410 of the traveling mechanism 400, while other structures are omitted. For other structures of the traveling mechanism 400, reference may be made to mature articles in the prior art, which will not be described in detail in the present application.

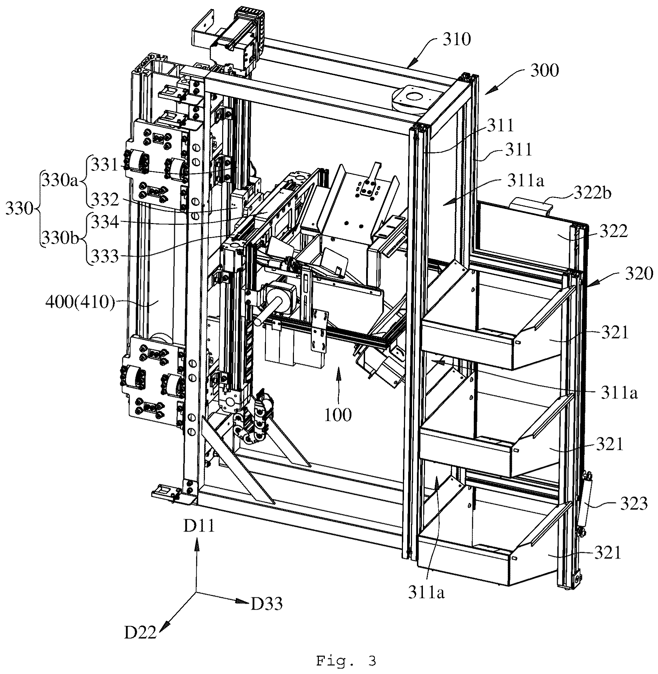

As shown in Fig. 3, the pickup mechanism 300 according to the embodiment of the present application includes a lifting frame 310, an article picker 100 and a sorting assembly 320. The lifting frame 310 is liftably connected to the upright 410 of the traveling mechanism 400 along a first direction D11. Wherein, an axial direction of the upright 410 is parallel to the first direction D11. The article picker 100 is movably connected to the lifting frame 310 through the movement assembly 330; the sorting assembly 320 is connected to the lifting frame 310 and includes a plurality of sorting hoppers 321; wherein the article picker 100 is configured to pick up articles on a shelf and convey the articles to any one of the plurality of sorting hoppers 321.

When the pickup mechanism 300 according to the embodiments of the present application picks up the articles, after a first target articles is picked up, the article picker 100 transfers the first target article to one of the plurality of sorting hoppers 321, and then the article picker 100 continues to pick up a second target article. If the second target article is at a very close distance from the first target article, the second target article is picked up by only driving the article picker 100 to move relative to the lifting frame 310 without driving the traveling mechanism 400 to move and/or driving the lifting frame 310 to lift. Afterwards, the second target article is then transferred to one of the remaining empty sorting hoppers 321. When all the sorting hoppers 321 are loaded with articles, the traveling mechanism 400 is driven back, so as to transfer all the articles in the pickup mechanism 300 to the workstation 500.

It can be seen that, in the pickup mechanism 300 according to the embodiments of the present application, the article picker 100 is movably connected to the lifting frame 310 through the movement assembly 330, and the sorting assembly 320 includes a plurality of sorting hoppers 321 for accommodating articles. By way of a slight movement of the article picker 100 relative to the lifting frame 310, the article picker 100then picks up a plurality of articles and load them into the plurality of sorting hoppers 321 respectively, which significantly improves the pickup efficiency of the pickup mechanism 300.

As shown in Fig. 3, the movement assembly 330 includes a first movement apparatus 330a and a second movement apparatus 330b. The first movement apparatus 330a is configured to drive the article picker 100 to move along the first direction D11. The second movement apparatus 330b is configured to drive the article picker 100 to move along the second direction D22. Wherein, the first direction D11, the second direction D22 and the third direction D33 are perpendicular to each other. The plurality of sorting hoppers 321 are arranged side by side along the first direction D11 or the second direction D22.

As an example, the first movement apparatus 330a and the second movement apparatus 330b are linear slide. For example, the first movement apparatus 330a includes a first slide rail 331 and a first slider 332. The first slide rail 331 is connected to the lifting frame 310, and the length direction of the first slide rail 331 is parallel to the first direction D11. The first slider 332 is movably connected to the first slide rail 331 along the first direction D11.

The second movement apparatus 330b includes a second slide rail 333 and a second slider 334. The second slide rail 333 is connected to the first slider 332, and the length direction of the second slide rail 333 is parallel to the second direction D22. The second slider 334 is movably connected to the second slide rail 333 along the second direction D22. The article picker 100 is connected to the second slider 334.

Of course, in other embodiments, the first movement apparatus 330a and the second movement apparatus 330b may also be other linear drive mechanisms, which will not be described in detail here.

In addition, alternatively, a movement path of the article picker 100 relative to the lifting frame 310 through the movement assembly 330 may not be straight, for example, it may also be arc, as long as it is satisfied that different target articles can be picked up by moving the article picker 100 relative to the lifting frame 310.

As shown in Fig. 3, the lifting frame 310 includes two first longitudinal beams 311 arranged at intervals along the second direction D22, and the plurality of sorting hoppers 321 are connected to the two first longitudinal beams 311 and arranged side by side along the first direction D11; wherein an area between the two first longitudinal beams 311 is divided into a plurality of first windows 311a by the plurality of sorting hoppers 321, and the plurality of first windows 311a correspond to the plurality of sorting hoppers 321 respectively.

For example, after the article picker 100 picks up the first target article, the article picker 100 aligns with one of the first windows 311a through the coordinated movement of the first movement apparatus 330a and the second movement apparatus 330b, so that the first target article in the article picker 100 passes through the first windows 311a to slide off into one of the sorting hoppers 321s.

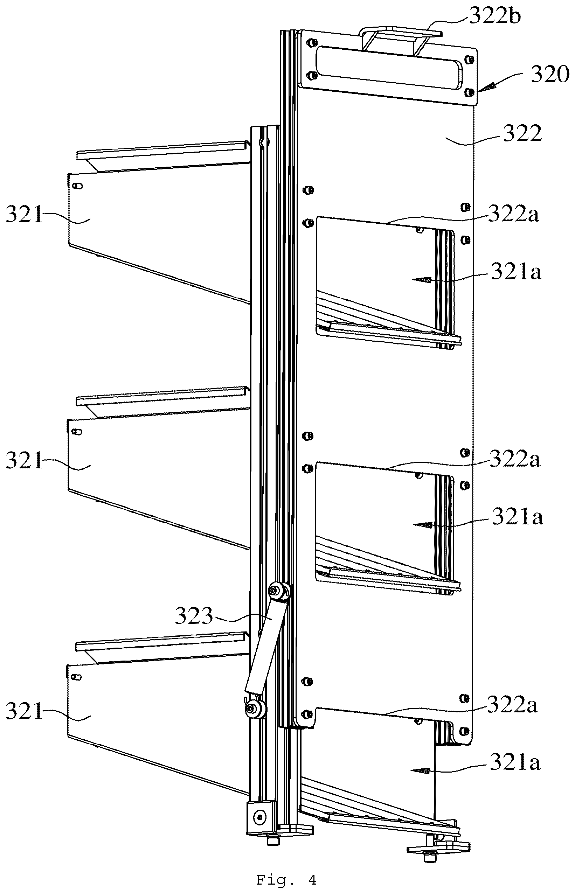

As shown in Fig. 4, each of the plurality of sorting hoppers 321 is provided with a first outlet 321a for the articles to slide out; the sorting assembly 320 further includes a shielding member 322 movably connected to the lifting frame 310 between a first position and a second position, and the shielding member 322 is provided with a plurality of second windows 322a; when the shielding member 322 is located at the first position, the shielding member 322 simultaneously blocks the plurality of first outlets 321a; and when the shielding member 322 is located at the second position, the plurality of second windows 322a communicate with the plurality of first outlets 321a respectively.

During the picking up process of the article picker 100, the shielding member 322 is located at the first position, so that the shielding member 322 blocks the plurality of first outlets 321a of the plurality of sorting hoppers 321, thereby preventing the articles from slipping out of the first outlets 321a of the sorting hoppers 321. After the article picker 100 finishes picking up articles, and the traveling mechanism 400 drives the article picker 300 to return to the workstation 500, the shielding member 322 is located at the second position, and the articles in each sorting hopper 321 automatically slides off into to the workstation 500 through the second window 322a corresponding to the sorting hopper 321.

As an example, the shielding member 322 is movably connected to the lifting frame 310 along a lifting direction (the first direction D11) of the lifting frame 310. Since the first direction D11 is the vertical direction, the shielding member 322 can move from the second position to the first position by its own gravity.

The sorting assembly 320 further includes an elastic member 323 connected to the lifting frame 310 and the shielding member 322 and configured to provide an elastic force to the shielding member 322 to move to the first position. By providing the elastic member 323, it is ensured that the shielding member 322 remains at the first position during the picking up process of the pickup mechanism 300, so as to prevent the articles in the sorting assembly 320 from sliding off resulting from the shielding member 322 accidentally opening the first outlets 321a of the sorting hoppers 321.

In one embodiment, the elastic member 323 may be a tension spring, but is not limited thereto.

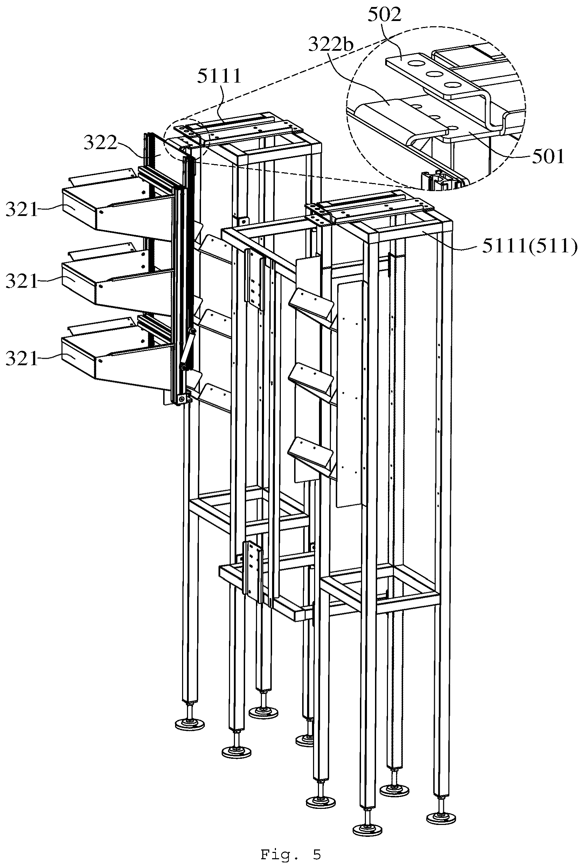

As shown in Fig. 5, a trigger 322b is provided on top of the shielding member 322. The workstation 500 is provided with an abutment member 501, and orthographic projections of the abutment member 501 and the trigger 322b on a target plane have overlapping first projections. The target plane is perpendicular to the lifting direction (the first direction D11) of the lifting frame 310. The abutment member 501 is configured to abut against the trigger 322b When the lifting frame 310 descends, so that the shielding member 322 moves from the first position to the second position.

In the embodiments of the present application, when the traveling mechanism 400 drives the pickup mechanism 300 to move to the vicinity of the workstation 500, the trigger 322b is located above the abutment member 501. The orthographic projections of the abutment member 501 and the trigger 322b have overlapping first projections on the target plane. When the lifting frame 310 drives the pickup mechanism 300 to descend, the abutment member 501 abuts against the trigger 322b, so that the shielding member 322 moves from the first position to the second position. As can be seen, by providing the abutment member 501 and the trigger 322b, when the lifting frame 310 descends, the shielding member 322 automatically opens the first outlets 321a of the sorting hoppers 321, so that the articles in the sorting hopper 321 slide off into to the workstation 500.

As shown in Fig. 5, the workstation 500 further includes a pressing member 502. Orthogonal projections of the pressing member 502 and the trigger 322b have overlapping second projections on the target plane. The pressing member 502 is configured to stop the trigger 322b When the lifting frame 310 ascends.

When the articles in all the sorting hopper 321 slide into the workstation 500, the traveling mechanism 400 drives the pickup mechanism 300 to perform a next pickup action. In normal circumstances, after the trigger 322b leaves the abutment member 501, the shielding member 322 moves from the second position to the first position under the effect of the gravity of the shielding member 322 and/or the elastic force of the elastic member 323. However, under abnormal circumstances, for example, when the shielding member 322 does not slide smoothly relative to the lifting frame 310, the shielding member 322 is likely to get stuck and cannot move to the first position under the effect of gravity and/or elastic force, which results in that the first outlets 321a of the sorting hoppers 321 are still in an open state. At this time, if a pickup action is performed, the articles will slide out of the first outlets 321a of the sorting hoppers 321.

In the embodiments of the present application, by providing the pressing member 502, it is possible to avoid that the shielding member 322 cannot be reset to the first position due to abnormalities, so as to ensure that a next pickup action is normally performed.

As shown in Fig. 5, the pressing member 502 and the abutment member 501 are oppositely arranged along the first direction D11, and the orthogonal projections have overlapping third projections on the target plane.

It should be noted that, along the first direction D11, the trigger 322b is at least partially located between the pressing member 502 and the abutment member 501. In order to ensure the normal lifting of the lifting frame 310 and avoid the interference of the pressing member 502, the movement of the traveling mechanism 400 and the lifting frame 310 is performed in stages:

During the process of returning to the workstation 500, the traveling mechanism 400 drives the pickup mechanism 300 to move to the third position. When the pickup mechanism 300 is located at the third position, the trigger 322b is located outside a space surrounded by the abutment member 501 and the pressing member 502, that is, there is no overlapping projection between the orthogonal projections of the trigger 322b and the abutment member 501 on the target plane. Afterwards, the traveling mechanism 400 translates along the third direction D33 to move the pickup mechanism 300 to the fourth position. When the pickup mechanism 300 is located at the fourth position, the trigger 322b is at least partially located between the abutment member 501 and the pressing member 502. Finally, the lifting frame 310 drives the pickup mechanism 300 to descend and move to the fifth position. During the movement process of the pickup mechanism 300 from the fourth position to the fifth position, the abutment member 501 abuts against the trigger 322b to move the shielding member 322 from the first position to the second position.

In the process of leaving the workstation 500 to pick up articles, the pickup mechanism 300 moves from the fifth position to the fourth position. If the shielding member 322 doesn't get stuck due to abnormalities, the shielding member 322 automatically returns to the first position, and then the traveling mechanism 400 translates along the third direction D33 to move the trigger 322b out of the space surrounded by the abutment member 501 and the pressing member 502. If the shielding member 322 get stuck at a certain position of the lifting frame 310 due to abnormalities, during the movement process of the pickup mechanism 300 from the fifth position to the fourth position, the pressing member 502 presses the trigger 322b, so that the shielding member 322 is reset to the first position under the effect of the abutment force, thereby avoiding that the first outlets 321a of the sorting hoppers 321 are still in the open state. Afterwards, the traveling mechanism 400 translates along the third direction D33 to move the trigger 322b out of the space surrounded by the abutment member 501 and the pressing member 502.

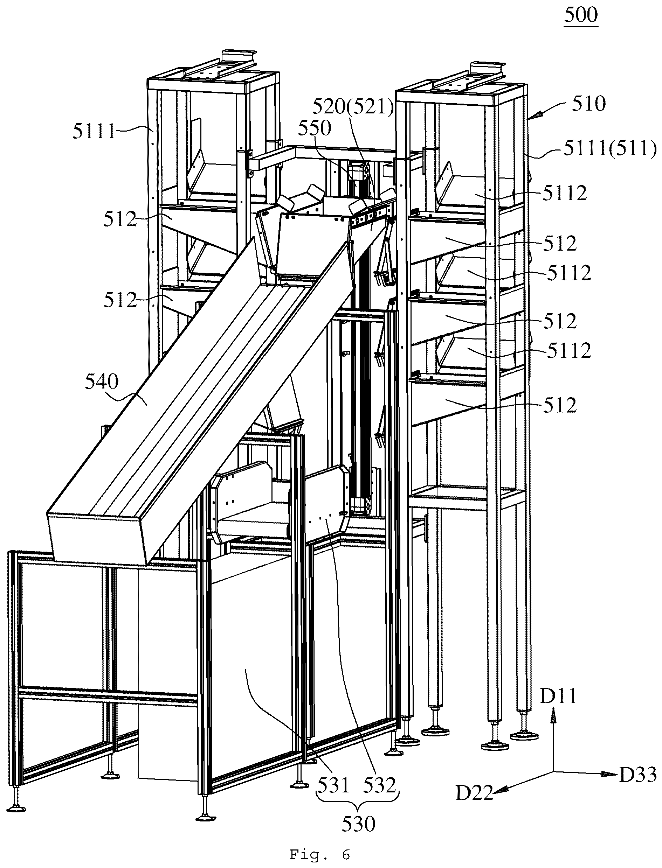

As shown in Fig. 6, the workstation 500 according to the embodiments of the present application includes a packing component 530, an abnormality processing component 540, a cache component 510 and a confluence component 520. The cache component 510 includes a cache frame 511 and a plurality of cache hoppers 512, wherein the plurality of cache hoppers 512 are installed on the cache frame 511 to receive articles conveyed by the pickup mechanism 300. The number of the cache hoppers 512 is greater than or equal to that of the sorting hoppers 321. The confluence component 520 is movably connected to the cache frame 511 through the movable component 550, and is configured to receive the articles in at least one cache hopper 512 among the plurality of cache hoppers 512, convey at least one article to the packing component 530, and convey abnormal articles to the abnormality processing component 540.

The abnormal articles refer to the articles falsely picked by the pickup mechanism 300, or one or several articles corresponding to an order canceled by clients.

The abnormality processing component 540 is configured to process the abnormal articles. For example, in one embodiment, the abnormality processing component 540 is a chute, which conveys the abnormal articles to a designated location.

Of course, in other embodiments, the abnormality processing component 540 may also be a device configured to collect the abnormal articles.

In the embodiments of the present application, after the pickup mechanism 300picks up the articles from the shelf, the traveling mechanism 400 drives the pickup mechanism 300 to move to the vicinity of the workstation 500, and all the articles in the plurality of sorting hoppers 321 of the pickup mechanism 300 are transferred to the plurality of cache hoppers 512 of the cache component 510. Then, according to whether the articles are abnormal, the confluence component 520 conveys the articles to the packing component 530 or the abnormality processing component 540. At this time, since the articles in the sorting hopper 321 of the pickup mechanism 300 has been transferred, the traveling mechanism 400 drives the pickup mechanism 300 to return to the shelf to perform a next pickup action, without waiting for the confluence component 520 to complete the article transfer before returning to the shelf to perform a next retrieval action.

It can be seen that, the workstation 500 according to the embodiments of the present application includes the cache component 510 and the confluence component 520. The cache component 510 is configured to temporarily store the articles conveyed by the pickup mechanism 300, and the confluence component 520 conveys the articles conveyed by the cache component 510 to the packing component 530 or the abnormality processing component 540. When the confluence component 520 transfers the articles, the pickup mechanism 300 is able to perform a next pickup action without waiting in place, which significantly improves the pickup efficiency and effectively enhance the ability of processing orders by the workstation 500.

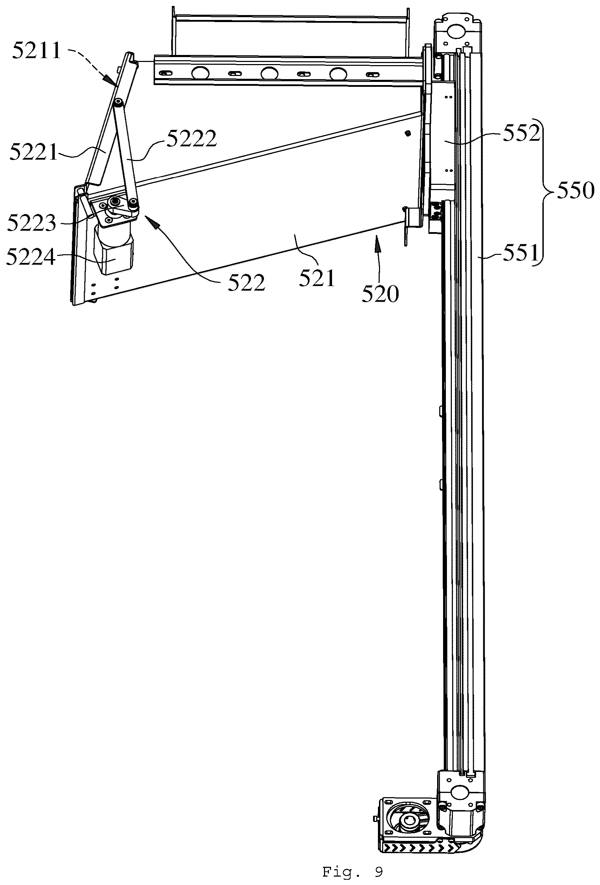

As shown in Figs. 6 and 9, as an example, the movable component 550 is a linear slide. For example, the movable component 550 includes a third slide rail 551 and a third slider 552. The third slide rail 551 is connected to the cache frame 511, and a length direction of the third slide rail 551 is parallel to the height direction (the first direction D11) of the cache frame 511. The third slider 552 is movably connected to the third slide rail 551, and the confluence component 520 is connected to the third slider 552.

Of course, in other embodiments, the movable component 550 may also be other linear drive mechanisms, which will not be described in detail here.

In addition, alternatively, a movement path of the confluence component 520 relative to the cache frame 511 through the movable component 550 may not be straight, for example, it may also be arc, as long as it is satisfied that the target articles in different cache hoppers 512 can be picked up by moving the confluence component 520 relative to the cache frame 511.

As shown in Fig. 6, the cache frame 511 includes two brackets 5111 arranged at intervals along a length direction (the third direction D33) of the cache frame 511, and each bracket 5111 is connected with a plurality of cache hoppers 512 arranged at intervals along a height direction (the first direction D11) of the cache frame 511; the number of the cache hopper 512 connected to the same bracket 5111 is greater than or equal to that of the sorting hopper 321. Along the height direction (the first direction D11) of the cache frame 511, the confluence component 520 is movably located between the two frames 5111.

It is to be noted that, in order to simplify the views, only one of the two frames 5111 in Fig. 1 is provided with the pickup mechanism 300 correspondingly, while the other bracket 5111 is not provided with the pickup mechanism 300 correspondingly. In fact, the two frames 5111 in the present application may be both provided with the pickup mechanism 300 correspondingly. In other words, the two frames 5111 of the workstation 500 correspond to two sets of pickup mechanisms 300 and traveling mechanisms 400 respectively, and the pickup mechanism 300 is liftably connected to a corresponding traveling mechanism 400. Along the third direction D33, the two traveling mechanisms 400 move along the direction close to or away from each other. The two traveling mechanisms 400 drive the two pickup mechanisms 300 to pick up the articles on two shelves at different positions respectively.

In the embodiments of the present application, the confluence component 520 is provided with a bracket 5111 on both sides along the third direction D33, and each bracket 5111 is provided with a plurality of cache hoppers 512. In this way, the confluence component 520 picks up the articles from the cache hoppers 512 located on different frames 5111, and conveys the articles to the packing assembly 530 for package.

For example, two articles corresponding to one order are located on different shelves respectively. In this case, two traveling mechanisms 400 drives two pickup mechanisms 300 to pick up two articles respectively and transfer them to the cache hoppers 512 on two frames 5111 respectively.

In the embodiments of the present application, each bracket 5111 is provided with three cache hoppers 512. For ease of description, the three cache hoppers 512 on one bracket 5111 are serial numbered 1, 2 and 3 respectively, and the bracket 5111three cache hoppers 512 on another bracket 5111 is numbered 4, 5 and 6 respectively. If two articles corresponding to one order are conveyed to 1 and 6 by the two pickup mechanisms 300 respectively, the articles in 1 and 6 are received sequentially by the confluence component 520, and the two articles are simultaneously conveyed to the packing component 530 for package after confluence.

As shown in Fig. 6, the packing component 530 includes a packer 531 and a cache table 532. The packer 531 is configured to pack the articles; and the cache table 532 is configured to cache the articles conveyed by the confluence component 520 and convey the articles to the packer 531.

In the embodiments of the present application, the cache table 532 caches the articles, thereby avoiding that the packer 531 is damaged due to an excessive impulse when the articles slide out of the confluence component 520.

In one embodiment, the cache table 532 may be a conveyor belt assembly, a conveyor roller assembly and the like, which is not particularly limited in the present application.

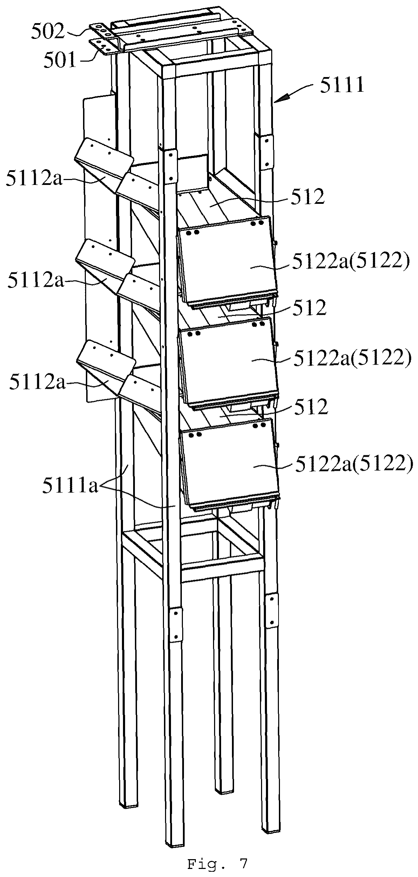

As shown in Fig. 7, each bracket 5111 includes two second longitudinal beams 5111a arranged at intervals, and a plurality of guide members 5112 arranged at intervals along a height direction (the first direction D11) of the cache frame 511 are connected between the two second longitudinal beams 5111a. The plurality of guide members 5112 correspond to the plurality of cache hoppers 512 in the bracket 5111 respectively, and each guide member 5112 is provided with a guide slope 5112a and configured to guide the articles to slide off from the pickup mechanism 300 into the cache hopper 512. The plurality of sorting hoppers 321 of the pickup mechanism 300 correspond to the plurality of guide members 5112 on one bracket 5111 respectively, so that the articles slide from the sorting hopper 321 into the cache hopper 512 with the help of the guide member 5112.

In one embodiment, the top of each bracket 5111 is provided with an abutment member 501 and a pressing member 502.

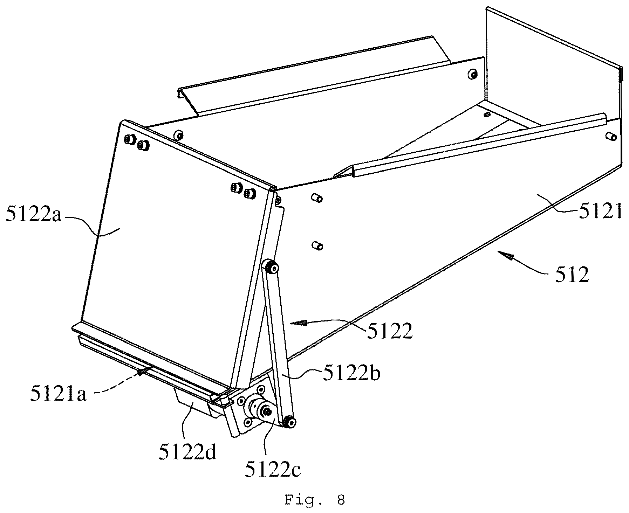

As shown in Fig. 8, the cache hopper 512 includes a hopper body 5121 and a first cover assembly 5122. The hopper body 5121 is connected to the cache frame 511 and is provided with a second outlet 5121a; and the first cover assembly 5122 is connected to the hopper body 5121 to close or open the second outlet 5121a. When the first cover assembly 5122 is in a closed state, the articles in the hopper body 5121 are prevented from slipping out of the second outlet 5121a.

As an example, the first cover assembly 5122 includes a first cover plate 5122a, a first connecting rod 522b, a second connecting rod 512c and a third motor 5122d. The first cover plate 5122a is rotatably connected to the hopper body 5121 to open or close the second outlet 5121a; one end of the first connecting rod 522b is hinged to a side of the first cover plate 5122a; one end of the second connecting rod 5122c is hinged to the other end of the first connecting rod 5122b; the third motor 5122d is connected to the hopper body 5121, and an output shaft of the third motor 5122d is connected to the other end of the second connecting rod 5122c.

As shown in Fig. 9, the confluence component 520 includes a confluence hopper 521 and a second cover assembly 522. The confluence hopper 521 is movably connected to the cache frame 511 through the movable component 550 and has a third outlet 5211. The second cover assembly 522 is connected to the confluence hopper 521 to close or open the third outlet 5211. When the second cover assembly 522 is in a closed state, the articles in the confluence hopper 521 are prevented from slipping out of the third outlet 5211.

As an example, the second cover assembly 522 includes a second cover plate 5221, a third connecting rod 5222, a fourth connecting rod 5223 and a fourth motor 5224. The second cover plate 5221 is rotatably connected to the confluence hopper 521 to open or close the third outlet 5211; one end of the third connecting rod 5222 is hinged to a side of the second cover plate 5221; one end of the fourth connecting rod 5223 is hinged to the other end of the third connecting rod 5222; the fourth motor 5224 is connected to the confluence hopper 521, and an output shaft of the fourth motor 5224 is connected to the other end of the fourth connecting rod 5223.

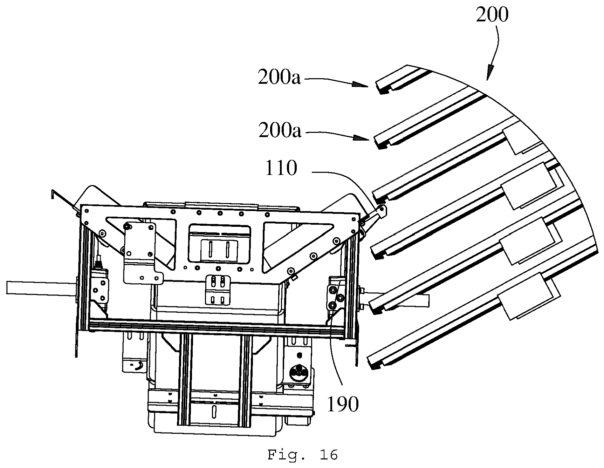

As shown in Fig. 16, the article picker 100 according to the embodiment of the present application picks up the articles placed on the shelf 200 from the shelf 200.

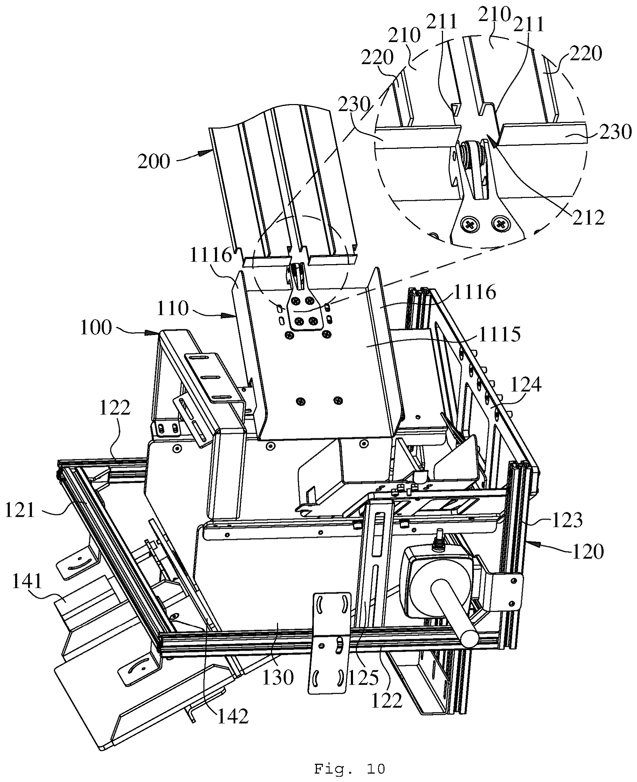

As shown in Figs. 10 and 16, the article picker 100 according to the embodiments of the present application includes a frame 120, a pickup hopper 130, a pickup assembly 110 and a locator 190. The pickup hopper 130 is installed on the frame 120, the pickup assembly 110 is connected to the frame 120, and the pickup assembly 110 is configured to guide the articles to slide into the pickup hopper 130. The locator 190 is connected to the frame 120 to locate the article picker 100 to a designated position of the shelf 200.

As shown in Fig. 16, the shelf 200 includes a plurality of channel assemblies 200a arranged at intervals along a height direction of the shelf 200, and the frame assembly 200a is configured to store articles. The locator 190 is configured to locate the article picker 100 to a designated frame assembly 200a. The pickup assembly 110 and the locator 190 of the article picker 100 correspond to two channel assemblies 200a located on different layers respectively.

Specifically, when picking up the articles, if the pickup assembly 110 needs to pick up an article located on one frame assembly 200a, the locator 190 locates the article picker 100 to one frame assembly 200a below the frame assembly 200a, thereby achieving cross-level pickup. For example, the pickup assembly 110 and the locator 190 correspond to two adjacent channel assemblies 200a respectively, or the pickup assembly 110 and the locator 190 correspond to the frame assembly 200a on both sides of one channel assembly 200a respectively.

It can be understood that, the locator 190 may locate the article picker 100 to a designated frame assembly 200a through the code scanning technology, the image recognition technology and the like. For example, the locator 190 may be a camera or a digital camera, and the frame assembly 200a is provided with a one-dimensional code or a two-dimensional code. By obtaining the information corresponding to the one-dimensional code or the two-dimensional code through the locator 190, the article picker 100 is moved to a designated frame assembly 200a, and then the pickup assembly 110 correspondingly moves to a designated frame assembly 200a to be picked up.

As shown in Fig. 10, the frame assembly 200a includes a plurality of article plates 210 arranged at intervals, wherein each article plate 210 is tilted, and the article plate 210 is configured to support articles. An end of each article plate 210 is provided with a baffle 230 configured to prevent the articles from slipping off the article plate 210 due to gravity. The end of each article plate 210 is also provided with a notch 211, and two adjacent notches 211 on adjacent article plates 210 form a gap 212. Each article plate 210 is also provided with a partition 220, and two adjacent partitions 220 in adjacent article plates 210 form a storage space for storing articles arranged side by side along an inclined direction of the article plate 210. Under the effect of gravity, two adjacent articles abut against each other, and the article located at the lowermost among the plurality of articles abuts against the baffle 230.

When the article picker 100 picks up articles, the pickup assembly 110 moves to the bottom of the article plate 210 and passes through the gap 212 from bottom to top, so that the pickup assembly 110 lifts the article located at the lowermost among the plurality of articles, and makes the article climb over the baffle 230 to slide to the pickup assembly 110, and then slide into the pickup hopper 130 through the pickup assembly 110.

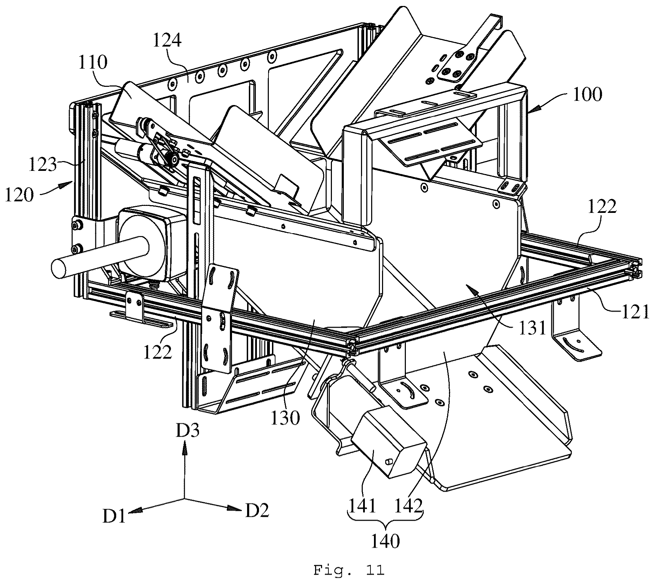

As shown in Fig. 11, the frame 120 includes a first cross beam 121, two second cross beams 122, two third longitudinal beams 123 and a back plate 124. A length direction of the first cross beam 121 is parallel to a left-right direction D1 (the direction indicated by the arrow is left and the reverse direction is right), a length direction of the second cross beam 122 is parallel to a front-back direction D2 (the direction indicated by the arrow is front and the reverse direction is rear), and a length direction of the third longitudinal beam 123 is parallel to an up-down direction D3 (the direction indicated by the arrow is up and the reverse direction is down). Both ends of the first cross beam 121 along the left-right direction D1 are connected with front ends of the two second cross beams 122 respectively, and lower ends of the two third longitudinal beams 123 are connected with rear ends of the two second cross beams 122 respectively. The back plate 124 is connected to the two third longitudinal beams 123 and located at a rear side of the two third longitudinal beams 123. The left-right direction D1, the front-back direction D2 and the up-down direction D3 are perpendicular to each other.

The frame 120 further includes two support beams 125, a length direction of each support beam 125 is parallel to the up-down direction D3, and the two support beams 125 are connected to the two second cross beams 122 respectively.

Wherein, the article picker 100 according to the embodiments of the present application includes two pickup assemblies 110, wherein the two pickup assemblies 110 are arranged oppositely along the left-right direction D1 and connected with the two support beams 125 respectively, and are also connected with the back plate 124.

The pickup hopper 130 is located in the space surrounded by the first cross beam 121 and the two second cross beams 122, and the pickup hopper 130 is connected to the two pickup assemblies 110.

Of course, in other embodiments, the number of the pickup assemblies 110 may also be one, three or other numbers. The pickup hopper 130 may be connected with the first cross beam 121 and the second cross beam 122.

As shown in Fig. 11, the pickup hopper 130 has a fourth outlet 131 for the articles to slide out. The article picker 100 further includes an opening and closing assembly 140 configured to open or close the fourth outlet 131.

As an example, the opening and closing assembly 140 includes a drive mechanism 141 and a door member 142, wherein the door member 142 is movable between a first position to close the fourth outlet 131 and a second position to open the fourth outlet 131, and the drive mechanism 141 is connected to the pickup hopper 130 and the door member 142 to drive the door member 142 to move. It can be understood that, by providing the opening and closing assembly 140, it is possible to control when the articles in the pickup hopper 130 slide out of the pickup hopper 130.

It can be understood that, the drive mechanism 141 may be an motor (defined as a second motor), an electric push rod or the like, which is not limited in the present application.

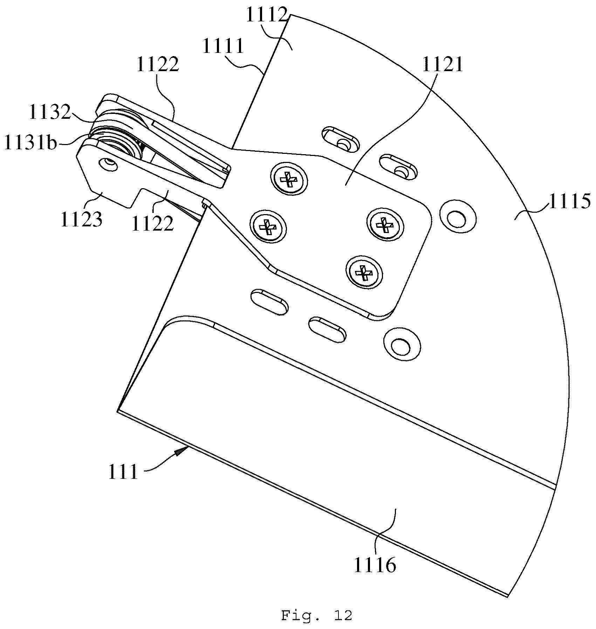

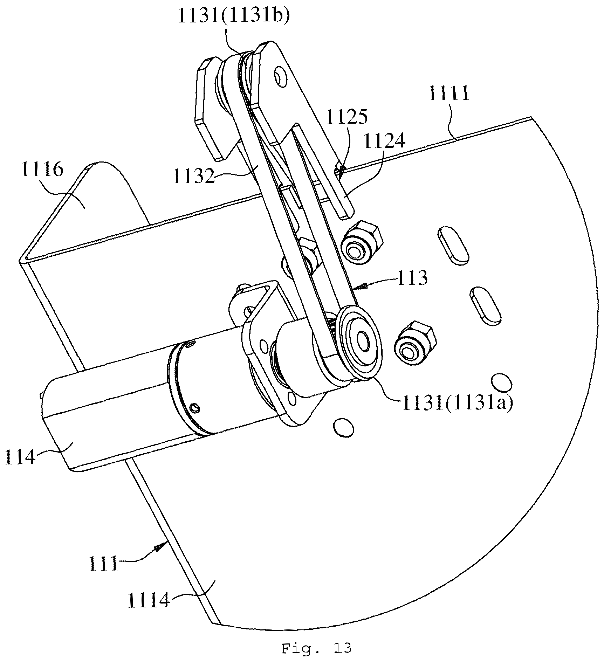

As shown in Figs. 12 and 13, the pickup assembly 110 according to the embodiments of the present application includes a ramp 111, a guide member 112, a rotary apparatus 113 and a first motor 114. The ramp 111 has an edge 1111. The guide member 112 is connected to the ramp 111, and the guide member 112 at least partially extends beyond the edge 1111; the rotary apparatus 113 is rotatably connected to a part of the guide member 112 extending beyond the edge 1111, and is configured to generate friction with the articles to drive the articles to slide onto the ramp 111 through the guide member 112; the first motor 114 is connected to the rotary apparatus 113 to drive the rotary apparatus 113 to rotate.

As shown in Fig. 10, when the pickup assembly 110 according to the embodiments of the present application picks up articles, the guide member 112 and the rotary apparatus 113 at least partially pass through the gap 212 from bottom to top, and the first motor 114 drives the rotary apparatus 113 to rotate, then the articles are driven to slide onto the ramp 111 through the guide member 112 by the friction force between the rotary apparatus 113 and the articles.

It can be seen that, the pickup assembly 110 according to the embodiment of the present application picks up articles through the rotation of the rotary apparatus 113 and the friction force between the rotary apparatus 113 and the articles, so that the pickup efficiency is significantly improved. Moreover, during the process of sliding into the pickup assembly 110, the articles are subjected to not only gravity of the articles themselves, but also the frictional force, which significantly improves a success rate of the articles sliding into the pickup assembly 110.

The ramp 111 has a target included angle relative to the horizontal plane, that is, the ramp 111 is inclined. The ramp 111 has a bottom plate 1115 and two side plates 1116, and two sides of the bottom plate 1115 along the front-back direction D2 are connected with the two side plates 1116 respectively. By providing the side plates 1116, the articles on the ramp 111 are prevented from slipping off a side of the ramp 111. The bottom plate 1115 of the ramp 111 has the edge 1111.

Continuing to refer to Figs. 12 and 13, the rotary apparatus 113 includes two rotary members 1131 and an annular member 1132. For ease of description, the two rotary members 1131 are defined as a first rotary member 1131a and a second rotary member 1131b respectively. The first rotary member 1131a is connected with the output shaft of the first motor 114, and the second rotary member 1131b is rotatably connected with the portion of the guide member 112 extending from the edge 1111. The annular member 1132 is wound around the outer peripheries of the two rotary members 1131, and an outer side surface of the annular member 1132 is used to generate friction with the articles. When the first motor 114 works, the first rotary member 1131a is driven to rotate, and the first rotary member 1131a drives the annular member 1132 to rotate, which in turn drives the second rotary member 1131b to follow. During the rotation process of the annular member 1132, the outer surface of the annular member 1132 generates friction with the articles, so that the articles are dragged from the shelf 200 into the ramp 111 by the friction force.

As an example, an inner side surface of the annular member 1132 has a first tooth structure, an outer side surface of each rotary member 1131 has a second tooth structure, and the first tooth structure is meshed with the second tooth structure. That is, in the embodiment of the present application, the rotary apparatus 113 is a synchronous belt structure. When the rotary apparatus 113 is a synchronous belt structure, the first rotary member 1131a is a synchronous wheel, the second rotary member 1131b is a driven wheel, and the annular member 1132 is a synchronous belt.

Of course, the rotary apparatus 113 is not limited to the synchronous belt structure. For example, in other embodiments, the rotary apparatus 113 includes a friction wheel and a motor. The friction wheel is rotatably connected to the portion of the guide member 112 projecting from the edge 1111, and the motor is connected with the friction wheel to drive the friction wheel to rotate, so that the friction wheel generates friction with the articles to drive the articles to slide into the ramp 111 through the guide member 112.

Continuing to refer to Figs. 12 and 13, the bottom plate 1115 of the ramp 111 also has a ramp surface 1112 configured to guide the articles to slide and a back surface 1114 opposite to the ramp surface 1112. One side of the ramp surface 1112 is the edge 1111, and the guide member 112 is attached to the ramp surface 1112. The first rotary member 1131a and the first motor 114 are both located on one side where the back surface 1114 is located, and the second rotary member 1131b is at least partially higher than the ramp surface 1112. In one embodiment, the first motor 114 is fixedly connected to the bottom plate 1115 of the ramp 111. In other embodiments, the first motor 114 may also be fixedly connected to the frame 120. The first motor 114 is located on one side where the back surface 1114 of the ramp 111 is located, which does not affect the sliding of the articles on the ramp 1112.

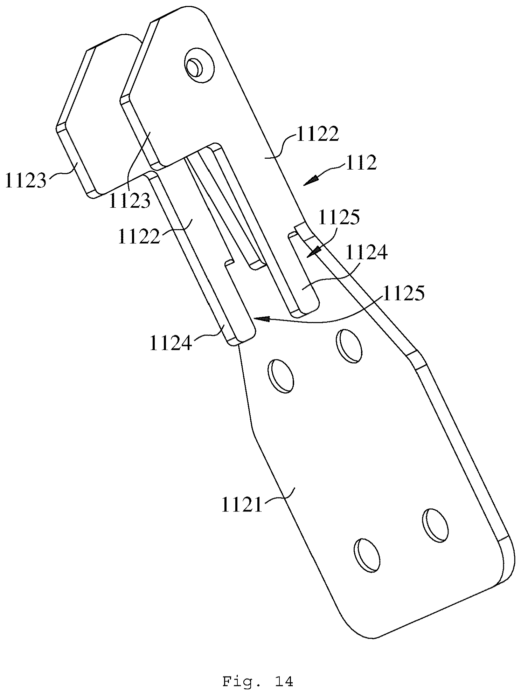

As shown in Figs. 13 and 14, the guide member 112 includes a connection portion 1121 and a pair of cantilevers 1122. The connection portion 1121 is connected to the ramp 111 and attached to the ramp surface 1112. The pair of cantilevers 1122 are connected to the connection portion 1121 and at least partially extend beyond the edge 1111; wherein the rotary apparatus 113 is at least partially rotatably connected between the pair of cantilevers 1122.

In the embodiment of the present application, the second rotary member 1131b is rotatably connected between the pair of cantilevers 1122, and the annular member 1132 is at least partially located between the pair of cantilevers 1122. By rotatably arranging the second rotary member 1131b between the pair of cantilevers 1122, a rotation stability of the second rotary member 1131b is improved, thereby improving a rotation stability of the annular member 1132 and achieving an effect of stably picking up the articles.

It can be understood that, the connection portion 1121 and the ramp 111 may be separate structures or an integrated structure.

One end of the cantilever 1122 connected with the connection portion 1121 is provided with a reinforcement portion 1124. The reinforcement portion 1124 and the connection portion 1121 are located on two sides of the ramp 111 in the thickness direction respectively, and a clamping groove 1125 for inserting the ramp 111 is formed between the reinforcement portion 1124 and the connection portion 1121. Specifically, the connection portion 1121 is located on one side where the ramp surface 1112 of the bottom plate 1115 of the ramp 111 is located, and the reinforcement portion 1124 is located on one side where the back surface 1114 of the bottom plate 1115 is located. When the guide member 112 is assembled with the ramp 111, one side where the edge 1111 of the ramp 111 is located is inserted into the clamping groove 1125 formed by the reinforcement portion 1124 and the connection portion 1121.

When the articles slide onto the guide member 112, the cantilever 1122 of the guide member 112 might bend downward under the gravity of the articles since the cantilever 1122 of the guide member 112 is suspended. In the embodiment of the present application, by providing the reinforcement portion 1124, the overall structural strength of the guide member 112 is improved. When the cantilever 1122 has a downward bending tendency, the reinforcement portion 1124 abuts against the bottom plate 1115 of the ramp 111 to maintain the stability of the guide member 112.

As shown in Figs. 13 and 14, one end of each cantilever 1122 away from the connection portion 1121 is provided with a stop portion 1123, the stop portion 1123 protrudes from the cantilever 1122 along a thickness direction of the connection portion 1121, and protrudes along the leftward and downward direction, so as to stop the articles.

As shown in Fig. 10, when the guide member 112 lifts the article located at the lowermost through the gap 212 from bottom to top, the article slides onto the ramp 111 under the effect of its own gravity and the friction force between the annular member 1132 and the article. At this time, the remaining articles will automatically move towards the baffle 230 under the effect of their own gravity.

In the embodiment of the present application, when the remaining articles automatically slide downwards on the article plate 210, the stop portion 1123 stops the articles before the baffle 230. After the article picker 100 moves away from the gap 212, the remaining articles continue to slide downward until they are blocked by the baffle 230. That is to say, after the article picker 100 picks up one article, the sliding of the remaining articles to the baffle 230 is divided into two stages. In this way, a sliding distance of the articles in each stage is reduced, thereby preventing the articles from breaking through the baffle 230 under a large inertia due to a too long sliding distance.

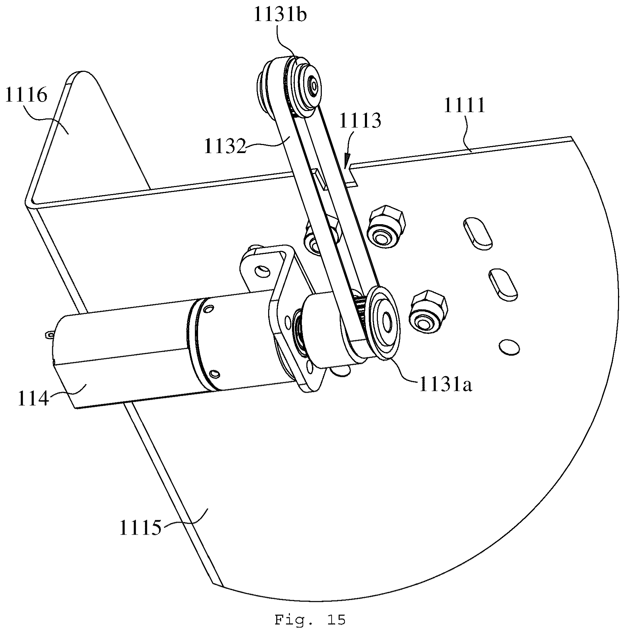

As shown in Fig. 15, the edge 1111 of the ramp 111 has an opening 1113 passing through the ramp surface 1112 and the back surface 1114, and the annular member 1132 is movably inserted into the opening 1113.

In the embodiment of the present application, the annular member 1132 is movably inserted into the opening 1113 of the ramp 111, so that a length of the guide member 112 projecting from the edge 1111 of the ramp 111 is reduced, which not only saves cost, but also prevents the guide member 112 from forming a longer cantilever structure.

It can be understood that, in other embodiments, the pickup assembly 110 may be other structures, for example, the pickup assembly 110 is a fork, the fork moves to the bottom of the article plate 210 and passes through the gap 212 from bottom to top, so that the fork lifts the article located at the lowermost among the plurality of articles and enables the article to climb over the baffle 230 to slide into the pickup hopper 130.

To sum up, the pickup mechanism and the pickup system according to the embodiments of the present application at least have the following advantages and beneficial effects:

In the pickup mechanism 300 according to the embodiments of the present application, the article picker 100 is movably connected to the lifting frame 310 through the movement assembly 330, and the sorting assembly 320 includes a plurality of sorting hoppers 321 for accommodating articles, on such basis, the article picker 100 moves slightly relative to the lifting frame 310, then the article picker 100 picks up a plurality of articles and load them into the plurality of sorting hoppers 321 respectively, thereby significantly improving the retrieval efficiency of the pickup mechanism 300.

It can be understood that, various embodiments/implementations provided in the present application may be combined with each other without contradiction, which will not be exemplified one by one here.

In the embodiments of this application, the terms "first", "second" and "third" are only used for descriptive purposes, but cannot be understood as indicating or implying relative importance; the term "a plurality of" refers to two or more unless otherwise explicitly defined. The terms such as "installation", "connected", "connection" and "fixing" should be understood broadly. For example, "connection" may be a fixed connection, a detachable connection or an integral connection; "connected" may be directly connected or indirectly connected through an intermediate medium. For those of ordinary skill in the art, the specific meanings of the above-described terms in the embodiments of this application may be understood according to specific conditions.

In the description of the embodiments of this application, it should be understood that, the azimuth or positional relationship indicated by the terms "upper", "lower", "left", "right", "front" and "rear" is based on the azimuth or positional relationship shown in the accompanying drawings, which is only for the convenience of describing the embodiments of this application and simplifying the description, but does not indicate or imply that the referred device or unit must have a specific direction, and be constructed and operated in a specific orientation. Therefore, it cannot be understood as limiting the embodiments of this application.

In the description of this specification, the terms such as "one embodiment", "some embodiments" and "specific embodiments" mean that the specific features, structures, materials or characteristics described in connection with this embodiment or example are included in at least one embodiment or example of the embodiments of this application. In this specification, the schematic expressions of the above-described terms do not necessarily refer to the same embodiment or example. Moreover, the specific features, structures, materials or characteristics described may be combined in any one or more embodiments or examples in a suitable manner.

The above which is only the preferred embodiment of the embodiments of this application, is not used to limit the embodiments of this application. For those skilled in the art, various modifications and changes may be made to the embodiments of this application. Any modification, equivalent substitution, improvement and the like made within the spirit and principles of the embodiments of this application shall be included in the protection scope of the embodiments of this application.

## Claims

1. A pickup mechanism, comprising:
a lifting frame (310);
an article picker (100) movably connected to the lifting frame (310) through a movement assembly (330); and
a sorting assembly (320) connected to the lifting frame (310) and comprising a plurality of sorting hoppers (321);
wherein the article picker (100) is configured to pick up articles on a shelf (200) and convey the articles to any one of the plurality of sorting hoppers (321).

2. The pickup mechanism according to claim 1, wherein the movement assembly (330) comprises:
a first movement apparatus (330a) configured to drive the article picker (100) to move along a first direction (D1); and
a second movement apparatus (330b) configured to drive the article picker (100) to move along a second direction (D2); wherein the first direction (D1) is perpendicular to the second direction (D2);
wherein the lifting frame (310) is liftable along the first direction (D1), and the plurality of sorting hoppers (321) are arranged side by side along the first direction (D1) or the second direction (D2).

3. The pickup mechanism according to claim 2, wherein the first movement apparatus (330a) comprises a first slide rail (331) and a first slider (332), the first slide rail (331) is connected to the lifting frame (310), and the first slider (332) is movably connected to the first slide rail (331) along the first direction (D1);
the second movement apparatus (330b) comprises a second slide rail (333) and a second slider (334), wherein the second slide rail (333) is connected to the first slider (332), and the second slider (334) is movably connected to the second slide rail (333) along the second direction (D2);
the article picker (100) is connected to the second slider (334) .

4. The pickup mechanism according to claim 2, wherein the lifting frame (310) comprises two first longitudinal beams (311) arranged at intervals along the second direction (D2), and the plurality of sorting hoppers (321) are connected to the two first longitudinal beams (311) and arranged side by side along the first direction (D1) ;
wherein an area between the two first longitudinal beams (311) is divided into a plurality of first windows (311a) by the plurality of sorting hoppers (321), and the plurality of first windows (311a) correspond to the plurality of sorting hoppers (321) respectively.

5. The pickup mechanism according to claim 1, wherein each of the plurality of sorting hoppers (321) is provided with a first outlet (321a) for the articles to slide out;
the sorting assembly (320) further comprises a shielding member (322), wherein the shielding member (322) is movably connected to the lifting frame (310) between a first position and a second position, and the shielding member (322) is provided with a plurality of second windows (322a); when the shielding member (322) is located at the first position, the shielding member (322) simultaneously blocks the plurality of first outlets (321a); when the shielding member (322) is located at the second position, the plurality of second windows (322a) communicate with the plurality of first outlets (321a) respectively.

6. The pickup mechanism according to claim 5, wherein the sorting assembly (320) further comprises an elastic member (323) connected to the lifting frame (310) and the shielding member (322) and configured to provide an elastic force to the shielding member (322) to move to the first position.

7. The pickup mechanism according to any one of claims 1 to 6, wherein the article picker (100) comprises:
a frame (120);
a pickup hopper (130) connected to the frame (120) and configured to convey the articles to any one of the plurality of sorting hoppers (321); and
a pickup assembly (110) connected to the frame (120) and configured to guide member the articles to slide into the pickup hopper (130).

8. The pickup mechanism according to claim 7, wherein the pickup assembly (110) comprises:
a ramp (111) with an edge (1111);
a guide member (112) connected to the ramp (111), and at least partially extending beyond the edge (1111);
a rotary apparatus (113), rotatably connected to a portion of the guide member (112) extending beyond the edge (1111), and configured to generate friction with the articles to drive the articles to slide onto the ramp (111) through the guide member (112); and
a first motor (114) connected with the rotary apparatus (113) to drive the rotary apparatus (113) to rotate.

9. The pickup mechanism according to claim 8, wherein the rotary apparatus (113) comprises:
two rotary members (1131), wherein one of the rotary members (1131) is connected with an output shaft of the first motor (114), and the other of the rotary members (1131) is rotatably connected with the portion of the guide member (112) extending beyond the edge (1111); and
an annular member (1132) arranged around peripheries of the two rotary members (1131), wherein an outer side surface of the annular member (1132) is configured to generate friction with the articles.

10. The pickup mechanism according to claim 8, wherein the guide member (112) comprises:
a connection portion (1121) connected to the ramp (111); and
a pair of cantilevers (1122) connected to the connection portion (1121) and at least partially extending beyond the edge (1111);
wherein the rotary apparatus (113) is at least partially rotatably connected between the pair of the cantilevers (1122).

11. The pickup mechanism according to claim 10, wherein one end of each cantilever (1122) away from the connection portion (1121) is provided with a stop portion (1123), which protrudes from the cantilever (1122) along a thickness direction of the connection portion (1121) to stop the articles.

12. The pickup mechanism according to claim 10, wherein one end of the cantilever (1122) connected with the connection portion (1121) is provided with a reinforcement portion (1124) , and the reinforcement portion(1124) and the connection portion (1121) are located on two sides of the ramp (111) in the thickness direction respectively, and a clamping groove (1125) for inserting the ramp (111) is formed between the reinforcement portion (1124) and the connection portion (1121).

13. The pickup mechanism according to claim 7, wherein the article picker (100) comprises two retrieval assemblies (110) arranged oppositely.

14. A pickup system, comprising the pickup mechanism according to any one of claims 1 to 13.

15. The pickup system according to claim 14, wherein the pickup system further comprises:
a traveling mechanism (400) provided with an upright (410), wherein the lifting frame (310) is liftably connected to the upright (410).

16. The pickup system according to claim 14, wherein a shielding member (322) of the pickup mechanism is movably connected to the lifting frame (310) along a lifting direction of the lifting frame (310) ; the shielding member (322) is provided with a trigger (322b) ;
the pickup system further comprises a workstation (500), wherein the workstation (500) is provided with an abutment member (501), and orthographic projections of the abutment member (501) and the trigger (322b) on a target plane have overlapping first projections; the target plane is perpendicular to a lifting direction of the lifting frame (310);
the abutment member (501) is configured to abut against the trigger (322b) when the lifting frame (310) descends, such that the shielding member (322) is moved from a first position to a second position.

17. The pickup system according to claim 16, wherein the workstation (500) further comprises a pressing member (502);
along the lifting direction of the lifting frame (310) , the trigger (322b) is at least partially located between the pressing member (502) and the abutment member (501) ; orthogonal projections of the pressing member (502) and the trigger (322b) have overlapping second projections on the target plane;
the pressing member (502) is configured to stop the trigger (322b) when the lifting frame (310) ascends.

18. The pickup system according to claim 14, wherein the pickup system further comprises a shelf (200) comprising a plurality of channel assemblies (200a) arranged at intervals along a height direction of the shelf (200);
the article picker (100) of the pickup mechanism comprises a locator (190) configured to locate the article picker (100) to a designated channel assembly (200a);
wherein a pickup assembly (110) and the locator (190) of the article picker (100) correspond to two channel assemblies (200a) located on different layers respectively.
